(19) Europäisches Patentamt
European Patent Office
Office européen des brevets

(11) **EP 4 718 803 A1**

(12) **EUROPEAN PATENT APPLICATION**
published in accordance with Art. 153(4) EPC

(43) Date of publication:
**01.04.2026   Bulletin 2026/14**

(21) Application number: **24838317.6**

(22) Date of filing: **05.03.2024**

(51) International Patent Classification (IPC):
*H04L 41/0894* (2022.01)

(52) Cooperative Patent Classification (CPC):
**G06F 11/30; G06F 11/34; H04L 41/0894;
H04L 41/22; H04L 43/0817; H04L 67/1097**

(86) International application number:
**PCT/CN2024/080115**

(87) International publication number:
**WO 2025/011056 (16.01.2025 Gazette 2025/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 07.07.2023   CN 202310833309
08.10.2023   CN 202311294827

(71) Applicant: **Huawei Cloud Computing
Technologies Co., Ltd.
Guiyang, Guizhou, 550025 (CN)**

(72) Inventors:
- **TANG, Wentao**
  Guiyang, Guizhou 550025 (CN)
- **ZHOU, Jianhua**
  Guiyang, Guizhou 550025 (CN)
- **ZENG, Yongqiang**
  Guiyang, Guizhou 550025 (CN)
- **YAN, Xuefeng**
  Guiyang, Guizhou 550025 (CN)
- **ZHOU, Feng**
  Guiyang, Guizhou 550025 (CN)

(74) Representative: **Goddar, Heinz J.
Boehmert & Boehmert
Anwaltspartnerschaft mbB
Pettenkoferstrasse 22
80336 München (DE)**

(54) **CLOUD DISK SERVICE CHANGE RECOMMENDATION METHOD AND APPARATUS**

(57)    This application relates to the field of cloud computing technologies, and provides a cloud disk service change recommendation method and apparatus. The method is applied to a cloud management platform, the cloud management platform is configured to manage infrastructure that provides a cloud service, the infrastructure includes a storage pool including storage space of a plurality of cloud servers, and the storage pool is virtually divided into a plurality of cloud disks. The method includes: obtaining running data of a first cloud disk in the plurality of cloud disks, where the running data of the first cloud disk includes a flow control parameter and capacity usage; determining a change policy for the first cloud disk based on the running data of the first cloud disk; and providing a recommendation interface for a tenant of the first cloud disk, where the recommendation interface includes the change policy. Based on the foregoing solution, a change policy for a cloud disk is determined based on running data of the cloud disk, and the change policy is recommended to a tenant of the cloud disk. According to the cloud disk service change recommendation method provided in embodiments of this application, a proper change policy can be recommended to the tenant, to improve service experience.

200

```
S210: Obtain running data of a first cloud disk in a plurality of
cloud disks, where the running data of the first cloud disk
includes a flow control parameter and capacity usage

S220: Determine a change policy for the first cloud disk based
on the running data of the first cloud disk

S230: Provide a recommendation interface for a tenant of the
first cloud disk, where the recommendation interface includes
the change policy
```

FIG. 2

## Description

This application claims priority to Chinese Patent Application No. 202311294827.3, filed with the China National Intellectual Property Administration on October 8, 2023 and entitled "CLOUD DISK SERVICE CHANGE RECOMMENDATION METHOD AND APPARATUS", which is incorporated herein by reference in its entirety.

In addition, this application claims priority to Chinese Patent Application No. 202310833309.8, filed with the China National Intellectual Property Administration on July 7, 2023 and entitled "OPTIMAL DATA-DRIVEN CLOUD SERVICE RECOMMENDATION SYSTEM", which is incorporated herein by reference in its entirety.

## TECHNICAL FIELD

This application relates to the field of cloud computing technologies, and more specifically, to a cloud disk service change recommendation method and apparatus.

## BACKGROUND

A cloud disk may be a virtual disk combined with a cloud virtual machine in a form of block storage (block storage). A tenant may create and change a file system, perform formatting, and the like on the cloud disk. The tenant may perform read and write operations on the cloud disk. A quantity of read and write operations performed by the cloud disk per second may be referred to as input/output per second (input/output per second, IOPS), and an amount of data transferred by the cloud disk per second may be referred to as a throughput. In one cloud disk, IOPS and a throughput have upper limits, which are respectively referred to as an IOPS upper limit and a throughput upper limit. The IOPS upper limit and the throughput upper limit may describe performance of the cloud disk.

When performance used by the cloud disk exceeds a performance parameter, the cloud disk triggers flow control (referred to as flow control for short). For example, a flow control apparatus sends a back pressure signal to an upstream of the cloud disk, where the back pressure signal indicates the upstream of the cloud disk to reduce sending times or an amount of data to the cloud disk, or stop sending data to the cloud disk, to ensure that the performance used by the cloud disk does not exceed an upper limit.

Frequent triggering of flow control indicates that a current performance parameter of the cloud disk cannot meet a requirement of the tenant. The tenant may upgrade the cloud disk based on the requirement of the tenant, so that an upgraded cloud disk has proper performance and a proper capacity. However, if an upgrade of the cloud disk is expected to be performed by the tenant autonomously, the tenant needs to understand a real cause of the flow control. However, most tenants do not have the capability of analyzing a flow control cause and formulating a proper change policy. As a result, costs invested by the tenants in cloud disk service change are high.

Therefore, how to enable a tenant to use a proper change policy to improve performance of a cloud disk is an urgent problem to be resolved.

## SUMMARY

This application provides a cloud disk service change recommendation method and apparatus, to recommend a proper change policy to a tenant, so that the tenant can use the proper change policy to improve performance of a cloud disk.

According to a first aspect, a cloud disk service change recommendation method is provided, where the method is applied to a cloud management platform, the cloud management platform is configured to manage infrastructure that provides a cloud service, the infrastructure includes a storage pool including storage space of a plurality of cloud servers, and the storage pool is virtually divided into a plurality of cloud disks. The method includes: obtaining running data of a first cloud disk in the plurality of cloud disks, where the running data of the first cloud disk includes a flow control parameter and capacity usage; determining a change policy for the first cloud disk based on the running data of the first cloud disk; and providing a recommendation interface for a tenant of the first cloud disk, where the recommendation interface includes the change policy.

Based on the foregoing solution, a change policy for a cloud disk is determined based on running data of the cloud disk, and the change policy is recommended to a tenant of the cloud disk. According to the cloud disk service change recommendation method provided in this embodiment of this application, a proper change policy can be recommended to the tenant, so that the tenant can use the proper change policy to improve performance of the cloud disk. In this way, service experience is improved.

With reference to the first aspect, in some implementations of the first aspect, the change policy includes one or more of the following: skipping an upgrade, expanding a cloud disk capacity, switching to a second cloud disk, or automatically increasing performance during flow control, where performance of the second cloud disk is greater than performance of the first cloud disk.

Based on the foregoing solution, according to the cloud disk service change recommendation method provided in this embodiment of this application, at least four different change policies may be recommended based on the running data of the cloud disk of the tenant. For example, when the tenant does not need an upgrade, the tenant may be recommended to skip the upgrade, to prevent the tenant from investing high costs due to excessively upgrading the cloud disk. For another example, when the performance of the cloud disk is low due to an insufficient capacity, the tenant may be recommended to expand the cloud disk capacity, to effectively improve the performance of the cloud disk of the tenant. For still another example, when the tenant occasionally has high-performance requirements, the tenant may be recommended to automatically increase the performance during the flow control, to improve user experience of the tenant without excessively increasing costs of the tenant. For yet another example, when the tenant genuinely needs to switch to a cloud disk with higher performance, the tenant is recommended to switch to a new cloud disk. Therefore, according to the cloud disk service change recommendation method provided in this embodiment of this application, the tenant can be flexibly provided with a change policy, so that use costs of the tenant are reduced, and user experience of the tenant is improved.

With reference to the first aspect, in some implementations of the first aspect, determining the change policy for the first cloud disk based on the running data of the first cloud disk includes: when the flow control parameter is greater than or equal to a first threshold, determining the change policy based on the capacity usage.

Based on the foregoing solution, when the flow control parameter is high, the change policy may be determined based on the capacity usage. For example, if flow control is caused by an insufficient capacity, the cloud disk capacity may be expanded. For another example, if the problem of insufficient capacity is excluded, a new cloud disk may need to be switched to, or the performance of the cloud disk may be improved in another manner. In this way, a cause of the flow control may be analyzed based on the capacity usage, to recommend a proper change policy to the tenant, so that the use costs of the tenant are reduced, and user experience of the tenant is improved.

With reference to the first aspect, in some implementations of the first aspect, determining the change policy based on the capacity usage includes: when the capacity usage is greater than a second threshold, determining that the change policy is expanding the cloud disk capacity; or when the capacity usage is less than or equal to a second threshold, determining the change policy based on the flow control parameter.

Based on the foregoing solution, when the capacity usage is relatively high, the flow control may be caused by the insufficient capacity. Therefore, it is determined that the change policy is expanding the cloud disk capacity, to effectively improve the performance of the cloud disk of the tenant and improve user experience of the tenant. When the capacity usage is relatively low, the flow control is not caused by the insufficient capacity. Therefore, the change policy is further determined based on the flow control parameter, to avoid excessive capacity expansion and reduce the use costs of the tenant.

With reference to the first aspect, in some implementations of the first aspect, the running data of the first cloud disk further includes a current capacity of the first cloud disk, and determining that the change policy is expanding the cloud disk capacity includes: determining a target capacity based on the current capacity of the first cloud disk; and determining that the change policy is expanding the cloud disk capacity to the target capacity.

Based on the foregoing solution, when the cloud disk capacity needs to be expanded, the target capacity may be further calculated, and the tenant is recommended to upgrade the cloud disk to expand the cloud disk capacity to the target capacity. In this way, the performance of the cloud disk of the tenant is effectively improved, frequent triggering of flow control is avoided, and user experience of the tenant is improved.

With reference to the first aspect, in some implementations of the first aspect, determining the change policy based on the flow control parameter includes: when the flow control parameter is less than a third threshold, determining that the change policy is automatically increasing the performance during the flow control, where the third threshold is greater than the first threshold; or when the flow control parameter is greater than or equal to a third threshold, determining that the change policy is switching to the second cloud disk.

Based on the foregoing solution, when triggering of flow control is excessively frequent, it may be determined that the change policy is switching to a new cloud disk with higher performance, to meet a long-term high-performance requirement of the tenant and improve user experience of the tenant. When triggering of flow control is between infrequent and excessive frequent, it may be determined that the change policy is automatically increasing the performance during the flow control. In this way, when a high-performance requirement occurs, the performance is temporarily increased, to improve user experience of the tenant, and when the high-performance requirement disappears, the previous cloud disk may continue to be used, to reduce the use costs of the tenant.

With reference to the first aspect, in some implementations of the first aspect, the running data of the first cloud disk further includes a performance parameter, and determining that the change policy is switching to the second cloud disk includes: determining target performance based on the performance parameter of the first cloud disk; and determining that the change policy is switching to the second cloud disk that meets the target performance.

Based on the foregoing solution, when the performance needs to be improved, the target performance may be further calculated, and the tenant is recommended to upgrade the cloud disk by switching to a new cloud disk that meets the target performance, so that frequent triggering of flow control is effectively avoided and user experience of the tenant is improved.

With reference to the first aspect, in some implementations of the first aspect, determining the change policy for the first cloud disk based on the running data of the first cloud disk includes: when the flow control parameter is less than the first threshold, determining that the change policy is skipping the upgrade.

Based on the foregoing solution, when the flow control parameter is low, it indicates that current performance of the cloud disk of the tenant can meet a running requirement, and a cloud disk service does not need to be changed. Therefore, the change policy may be skipping the upgrade, to reduce the use costs of the tenant.

With reference to the first aspect, in some implementations of the first aspect, the recommendation interface further includes the running data of the first cloud disk.

Based on the foregoing solution, the recommendation interface further includes the running data of the cloud disk, so that the tenant can clearly learn of a running status of the cloud disk. This helps the tenant make decision, and improves user experience of the tenant.

With reference to the first aspect, in some implementations of the first aspect, the method further includes: obtaining running data of the storage pool; and determining, based on the running data of the storage pool, upgrade time corresponding to the change policy, where providing the recommendation interface for the tenant of the first cloud disk includes: providing the recommendation interface for the tenant of the first cloud disk, where the recommendation interface further includes the upgrade time.

Based on the foregoing solution, according to the cloud disk service change recommendation method provided in this embodiment of this application, the upgrade time can be determined based on the running data of the storage pool, and the upgrade time is provided for the tenant. This helps the tenant determine whether to perform the upgrade, and improves user experience of the tenant.

According to a second aspect, an embodiment of this application provides a cloud disk service change recommendation apparatus, where the cloud disk service change recommendation apparatus includes modules configured to implement any one of the first aspect or the possible implementations of the first aspect.

According to a third aspect, a computing device cluster is provided, including at least one computing device, where each computing device includes a processor and a memory. A processor of the at least one computing device is configured to execute instructions stored in a memory of the at least one computing device, to enable the computing device cluster to perform the cloud disk service change recommendation method according to any one of the first aspect or the possible implementations of the first aspect.

According to a fourth aspect, a computer program product including instructions is provided. When the instructions are run by a computing device cluster, the computing device cluster is enabled to perform the cloud disk service change recommendation method according to any one of the first aspect or the possible implementations of the first aspect.

According to a fifth aspect, a computer-readable storage medium is provided, including computer program instructions. When the computer program instructions are executed by a computing device cluster, the computing device cluster performs the cloud disk service change recommendation method according to any one of the first aspect or the possible implementations of the first aspect.

**BRIEF DESCRIPTION OF DRAWINGS**

FIG. 1 is a diagram of a system based on a cloud server system according to an embodiment of this application;
FIG. 2 is a schematic flowchart of a cloud disk service change recommendation method according to an embodiment of this application;
FIG. 3 is a schematic flowchart of determining a change policy according to an embodiment of this application;
FIG. 4 is a diagram of a recommendation interface according to an embodiment of this application;
FIG. 5 is a block diagram of a cloud disk service change recommendation apparatus according to an embodiment of this application;
FIG. 6 is a block diagram of a computing device according to an embodiment of this application;
FIG. 7 is a block diagram of a computing device cluster according to an embodiment of this application;
FIG. 8 is a block diagram of another computing device cluster according to an embodiment of this application; and
FIG. 9 is a block diagram of a cloud disk service change recommendation system according to an embodiment of this application.

**DESCRIPTION OF EMBODIMENTS**

The following describes technical solutions of this application with reference to the accompanying drawings.

All aspects, embodiments, or features are presented in this application by describing a system that may include a plurality of devices, components, modules, and the like. It should be understood that, each system may include another device, component, module, and the like, and/or may not include all devices, components, modules, and the like discussed with reference to the accompanying drawings. In addition, a combination of these solutions may be used.

Moreover, in embodiments of this application, a term "In an example", "for example", or the like is used to represent giving an example, an illustration, or descriptions. Any embodiment or design scheme described as an "example" in this application should not be explained as being more preferred or having more advantages than another embodiment or design scheme. To be precise, the term "example" is for presenting a concept in a specific manner.

A service scenario described in embodiments of this application is intended to describe the technical solutions in embodiments of this application more clearly, but does not constitute a limitation on the technical solutions provided in embodiments of this application. A person of ordinary skill in the art may learn that as a new service scenario emerges, the technical solutions provided in embodiments of this application are also applicable to a similar technical problem.

Reference to "an embodiment", "some embodiments", or the like described in this specification means that a specific feature, structure, or characteristic described with reference to the embodiment is included in one or more embodiments of this application. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized in another manner.

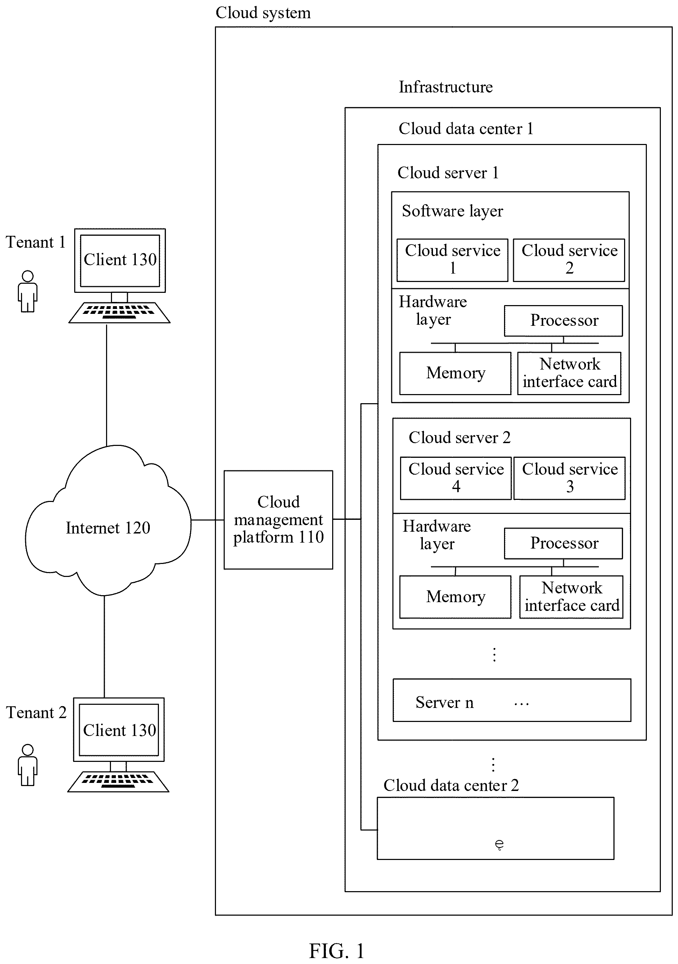

FIG. 1 is a diagram of a system based on a cloud server system according to an embodiment of this application.

As shown in FIG. 1, a cloud management platform 110 is configured to manage infrastructure that provides a plurality of cloud services. The infrastructure includes a plurality of cloud data centers, each cloud data center includes a plurality of cloud servers, and each cloud server includes cloud service resources to provide a corresponding cloud service for a tenant. For example, a plurality of microservices may be run in a cloud server.

The cloud management platform 110 provides an access interface (for example, an application programming interface (application programming interface, API)). The tenant can operate a client to remotely access the access interface, to register a cloud account and a password on the cloud management platform, and log in to the cloud management platform. After the cloud account and the password are successfully authenticated by the cloud management platform, the tenant may further pay to select and purchase a virtual machine of a specific specification (a processor, a memory, or a disk) on the cloud management platform. After the purchasing with payment succeeds, the cloud management platform provides a remote login account and password of the purchased virtual machine, and the client can remotely log in to the virtual machine, and install and run an application of the tenant on the virtual machine. A tenant of the cloud service may be an individual, an enterprise, a school, a hospital, an administrative department, or the like.

Functions of the cloud management platform 110 include but are not limited to a user console, a computing management service, a network management service, a storage management service, an authentication service, and an image management service. The user console provides the API to interact with the tenant. The computing management service is used for managing a bare metal server and a server running a virtual machine and a container. The network management service is used for managing a network service (for example, a gateway and a firewall). The storage management service is used for managing a storage service (for example, a data bucket service). The authentication service is used for managing an account and a password of the tenant. The image management service is used for managing a virtual machine image. The tenant may use a client 130 to log in to the cloud management platform 110 over an internet 120, to manage a rented cloud service.

For example, the plurality of cloud servers may be included in a storage pool, and a plurality of cloud disks of same or different specifications may be obtained through division based on performance (for example, read and write bandwidth and input/output frequency) and a total capacity of the storage pool. The tenant may rent one or a plurality of the cloud disks. It should be noted that the plurality of cloud disks rented by the tenant may come from one storage pool, or may come from a plurality of storage pools.

The cloud disk may be a virtual disk combined with a cloud virtual machine in a form of block storage (block storage). The tenant may create and change a file system, perform formatting, and the like on the cloud disk. The tenant may perform read and write operations on the cloud disk via the cloud management platform 110. A quantity of read and write operations performed by the cloud disk per second may be referred to as input/output per second (input/output per second, IOPS), and an amount of data transferred by the cloud disk per second may be referred to as a throughput. In one cloud disk, IOPS and a throughput have upper limits, which are respectively referred to as an IOPS upper limit and a throughput upper limit. The IOPS upper limit and the throughput upper limit may describe performance of the cloud disk.

The following lists performance and capacities of some cloud disks.

Extreme EVS disk (enhanced solid-state drive, ESSD): An API is ESSD, an IOPS upper limit is 128,000, and a throughput upper limit is 1,000 MB/s.

Ultra-high I/O EVS disk (solid-state drive, SSD): An API is SSD, an IOPS upper limit is 50,000, and a throughput upper limit is 350 MB/s.

General-purpose SSD V2: An API is GPSSD2, an IOPS upper limit is 128,000, and a throughput upper limit is 1,000 MB/s.

General-purpose SSD: An API is GPSSD, an IOPS upper limit is 20,000, and a throughput upper limit is 250 MB/s.

High I/O: An API is SAS, an IOPS upper limit is 5,000, and a throughput upper limit is 150 MB/s.

Common I/O: An API is SATA, an IOPS upper limit is 2,200, and a throughput upper limit is 50 MB/s.

The IOPS is the quantity of read and write operations performed by the cloud disk per second. The throughput is the amount of data transferred by the cloud disk per second, in other words, the amount of data read from and written into the cloud disk.

When performance used by the cloud disk exceeds an upper limit (for example, the IOPS upper limit or the throughput upper limit) of the performance, the cloud disk triggers traffic control (referred to as flow control for short). For example, a flow control apparatus sends a back pressure signal to an upstream of the cloud disk, where the back pressure signal indicates the upstream of the cloud disk to reduce sending times or an amount of data to the cloud disk or stop sending data to the cloud disk, so as to ensure that the performance used by the cloud disk does not exceed the upper limit. As a result, the flow control increases a data sending latency, reduces service processing efficiency, and degrades user experience of the tenant.

Frequent triggering of flow control indicates that a current performance upper limit of the cloud disk cannot meet a requirement of the tenant. The tenant may upgrade the cloud disk via the cloud management platform 110, for example, may select operations such as expanding a cloud disk capacity and changing a type of the cloud disk. In other words, the tenant may upgrade the cloud disk based on the requirement of the tenant, so that an upgraded cloud disk has proper performance and a proper capacity.

Generally, performance and a capacity of a cloud disk are coupled. For example, a throughput of an SSD cloud disk can be calculated by using the following formula:

$$\text{Throughput} = \min(350, 120 + 0.5 \times \text{Capacity})$$

Based on the foregoing formula, assuming that a 100 GB SSD disk is created, a throughput upper limit is 170 MB/s; assuming that a 200 GB SSD disk is created, a throughput upper limit is 220 MB/s; or assuming that a 500 GB SSD disk is created, a throughput upper limit is 350 MB/s. In other words, when a capacity of an SSD disk is less than 460 GB, a throughput upper limit can be increased by increasing the capacity. When the capacity is greater than 460 GB, the throughput upper limit cannot be increased by increasing the capacity. The IOPS and the capacity may also be coupled. In other words, for a specific cloud disk, there is a value, and when a cloud disk capacity is greater than the value, an IOPS upper limit cannot be increased by increasing the capacity; or when a cloud disk capacity is less than the value, an IOPS upper limit can be increased by increasing the capacity. In addition, the IOPS and the throughput affect each other.

During the use of the cloud disk, a part of the capacity is used. Therefore, an upper limit of performance such as the throughput may be affected by capacity usage. When the capacity usage is high, the performance of the cloud disk is affected by an insufficient capacity, and the performance can be improved by increasing the capacity. For example, a total capacity of a cloud disk of the tenant is 200 GB, capacity usage is 99%, and a remaining capacity is 2 GB. If the tenant expects to write 3 GB new data into the cloud disk, and the remaining capacity of the cloud disk is insufficient, the cloud disk needs to release a part of the capacity (for example, cached data such as snapshots), so that the tenant can write the 3 GB data into the cloud disk. However, it takes a period of time to release the capacity. During this period, flow control is triggered. The tenant can only perceive an outcome of this flow control, but is unaware of a cause of the flow control.

The performance and the capacity can alternatively be partially decoupled. For example, a reference value of the IOPS upper limit provided by the general-purpose SSD V2 whose API of is the GPSSD2 is 3,000, and a reference value of the throughput upper limit is 125 MiB/s. The IOPS upper limit and the throughput upper limit of the cloud disk can be flexibly configured without changing the cloud disk capacity. The throughput upper limit and the IOPS upper limit may be set freely. The IOPS upper limit may be preconfigured by the tenant, and ranges from 3,000 to 128,000. The throughput upper limit can also be configured by the tenant, and ranges from 125 MiB/s to 1,000 MiB/s.

However, if an upgrade of the cloud disk is expected to be performed by the tenant autonomously, the tenant needs to understand a real cause of the flow control. For example, the tenant needs to determine whether the flow control is caused by insufficient performance of the cloud disk or only by high capacity usage of the cloud disk. If the flow control is caused by the insufficient performance of the cloud disk, a new cloud disk with higher performance needs to be switched to. The performance cannot be significantly improved by expanding a capacity of the original cloud disk, and the problem cannot be resolved. If the flow control is caused by the high capacity usage of the cloud disk, the performance of the cloud disk can be significantly improved by expanding the capacity. In this case, switching to a new cloud disk with higher performance brings extra costs to the tenant. However, most tenants do not have the capability of analyzing a flow control cause and formulating a proper change policy. As a result, the tenants cannot resolve the problem of insufficient performance, and flow control is frequently triggered. This affects user experience of the tenants. Alternatively, the tenants perform excessive upgrades, and excessive costs are invested in cloud disk service change.

Therefore, how to enable a tenant to use a proper change policy to improve performance of a cloud disk is an urgent problem to be resolved.

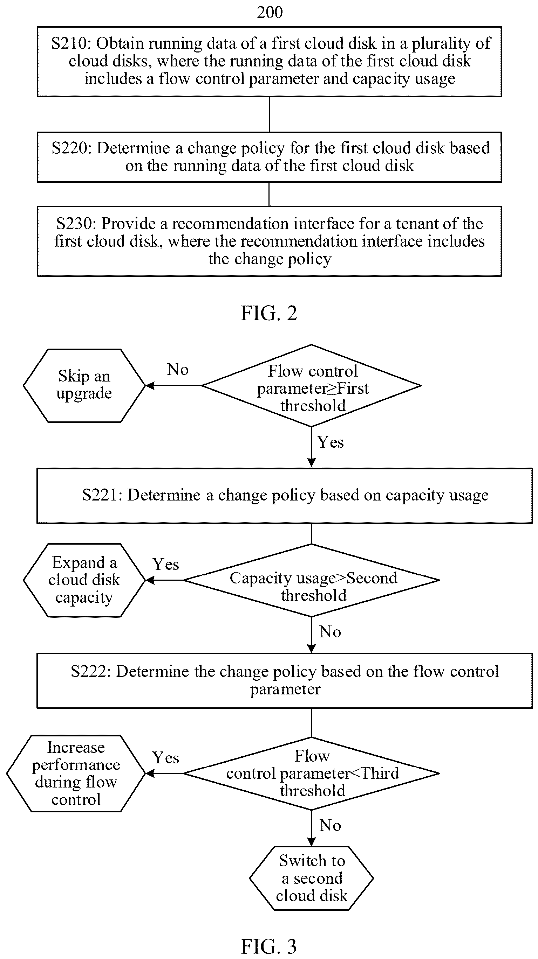

FIG. 2 is a schematic flowchart of a cloud disk service change recommendation method 200 according to an embodiment of this application. According to the method 200, a proper change policy can be recommended to a tenant, to improve performance of a cloud disk. The method 200 may be performed by any device with a computing function, for example, a cloud management platform 110. The method 200 may be applied to the cloud management platform 110, the cloud management platform 110 is configured to manage infrastructure that provides a cloud service, the infrastructure includes a storage pool including storage space of a plurality of cloud servers, and the storage pool is virtually divided into a plurality of cloud disks.

S210: Obtain running data of a first cloud disk in the plurality of cloud disks, where the running data of the first cloud disk includes a flow control parameter and capacity usage.

The first cloud disk may be any cloud disk of the tenant, and the running data of the first cloud disk may be running data of the first cloud disk in a past period of time. Specific time is not limited in this application. For example, the running data may be running data in past several hours, may be running data in past several days, or may be running data in past several months. It may be understood that the running data also includes current running data.

A specific form of the flow control parameter is not limited in this application. The flow control parameter may be understood as a flow control status, and the flow control parameter may include a quantity of flow control times, flow control frequency, or the like. For example, in the past 30 days, the first cloud disk triggers flow control for 90 times in total, and the flow control parameter may be 90. This means that flow control is triggered for 90 times in the past 30 days. In this case, the flow control parameter may be understood as the quantity of flow control times. The flow control parameter may alternatively be 3. This means that flow control is triggered for three times per day in the past 30 days. In this case, the flow control parameter may be understood as the flow control frequency.

A specific form of the capacity usage is not limited in this application, and the capacity usage may also be understood as a capacity usage status. For example, when a total capacity of the first cloud disk is 100 GB and a used capacity is 80 GB, the capacity usage is 80%. The capacity usage may also be represented by an absolute value, that is, understood as a capacity usage amount. For example, when a total capacity of the first cloud disk is 100 GB, and a used capacity is 80 GB, the capacity usage is also 80.

It should be noted that the running data is not limited to the flow control parameter and the capacity usage. For example, the running data may further include performance of the first cloud disk, such as IOPS and a throughput.

S220: Determine a change policy for the first cloud disk based on the running data of the first cloud disk.

For an embodiment of S220, refer to the following descriptions. Details are not described herein.

S230: Provide a recommendation interface for a tenant of the first cloud disk, where the recommendation interface includes the change policy.

Based on the foregoing solution, a change policy for a cloud disk is determined based on running data of the cloud disk, and the change policy is recommended to a tenant of the cloud disk. According to the cloud disk service change recommendation method provided in this embodiment of this application, a proper change policy can be recommended to the tenant, so that the tenant can use the proper change policy to improve the performance of the cloud disk.

In some embodiments, the change policy includes one or more of the following: skipping an upgrade, expanding a cloud disk capacity, switching to a second cloud disk, or automatically increasing performance during flow control, where performance of the second cloud disk is greater than the performance of the first cloud disk.

By skipping the upgrade, the tenant may be notified that the first cloud disk is in a good running state and does not need to be upgraded. Alternatively, by skipping the upgrade, the recommendation interface may not be provided for the tenant. By expanding the cloud disk capacity, a current capacity of the first cloud disk may be expanded to a capacity greater than the current capacity. By switching to the second cloud disk, the tenant may rent the second cloud disk instead of the first cloud disk. When the tenant determines that the change policy is automatically increasing the performance during the flow control, when the flow control is not performed, the capacity and the performance of the first cloud disk are consistent with those before the change policy is determined. The performance of the first cloud disk is improved during the flow control. When the flow control ends, performance is restored to being consistent with that before the change policy is determined. It may be understood that the change policy of automatically increasing the performance during the flow control may not change the cloud disk capacity.

Based on the foregoing solution, according to the cloud disk service change recommendation method provided in this embodiment of this application, at least four different change policies may be recommended based on the running data of the cloud disk of the tenant. For example, when the tenant does not need an upgrade, the tenant may be recommended to skip the upgrade, to prevent the tenant from investing high costs due to excessively upgrading the cloud disk. For another example, when the performance of the cloud disk is low due to an insufficient capacity, the tenant may be recommended to expand the cloud disk capacity, to effectively improve the performance of the cloud disk of the tenant. For still another example, when the tenant occasionally has high-performance requirements, the tenant may be recommended to automatically increase the performance during the flow control, to improve user experience of the tenant without excessively increasing costs of the tenant. For yet another example, when the tenant genuinely needs to switch to a cloud disk with higher performance, the tenant is recommended to switch to a new cloud disk. Therefore, according to the cloud disk service change recommendation method provided in this embodiment of this application, the tenant can be flexibly provided with a change policy, so that use costs of the tenant are reduced, and user experience of the tenant is improved.

The following describes in detail some embodiments of S220 with reference to FIG. 3.

FIG. 3 is a schematic flowchart of determining a change policy according to an embodiment of this application. FIG. 3 may be combined with S220. The procedure shown in FIG. 3 may be performed by any device with a computing function, for example, a cloud management platform 110.

Refer to FIG. 3. In some embodiments, S220 includes: When the flow control parameter is greater than or equal to a first threshold, determine the change policy based on the capacity usage.

The first threshold may be preset. For example, the first threshold may be set to five times of flow control per day. If the flow control parameter is greater than or equal to the first threshold, it means that the first cloud disk of the tenant undergoes flow control for a large quantity of times, and the performance of the first cloud disk may not meet a performance requirement of the tenant for running an application.

Based on the foregoing solution, when the flow control parameter is high, the change policy may be determined based on the capacity usage. For example, if flow control is caused by an insufficient capacity, the cloud disk capacity may be expanded. For another example, if the problem of insufficient capacity is excluded, a new cloud disk may need to be switched to, or the performance of the cloud disk may be improved in another manner. In this way, a cause of the flow control may be analyzed based on the capacity usage, to recommend a proper change policy to the tenant, so that the use costs of the tenant are reduced, and user experience of the tenant is improved.

Refer to FIG. 3. In some embodiments, S220 includes: When the flow control parameter is less than a first threshold, determine that the change policy is skipping the upgrade.

Based on the foregoing solution, when the flow control parameter is low, it indicates that current performance of the cloud disk of the tenant can meet a running requirement, and a cloud disk service does not need to be changed. Therefore, the change policy may be skipping the upgrade, to reduce the use costs of the tenant.

Refer to FIG. 3. In some embodiments, determining the change policy based on the capacity usage includes: when the capacity usage is greater than a second threshold, determining that the change policy is expanding the cloud disk capacity; or when the capacity usage is less than or equal to a second threshold, determining the change policy based on the flow control parameter.

The second threshold may be preset. For example, the second threshold may be set to 90%.

If the capacity usage is greater than the second threshold, it means that the capacity usage of the first cloud disk of the tenant is high, and a cause of excessive flow control and insufficient performance may be an insufficient capacity. Therefore, it can be determined that the change policy is expanding the cloud disk capacity. If the capacity usage is less than or equal to the second threshold, it means that the capacity usage of the first cloud disk of the tenant is not high, and even if the cloud disk capacity is further increased, the performance of the first cloud disk cannot be significantly improved. Therefore, the change policy may be further determined based on occurrence frequency of a high-performance requirement. For example, when the high-performance requirement occurs frequently, a new cloud disk with high performance may be switched to, to continuously provide higher performance. For another example, when the high-performance requirement does not occur frequently, high performance may be provided when needed, to reduce the use costs of the tenant.

Based on the foregoing solution, when the capacity usage is relatively high, the flow control may be caused by the insufficient capacity. Therefore, it is determined that the change policy is expanding the cloud disk capacity, to effectively improve the performance of the cloud disk of the tenant and improve user experience of the tenant. When the capacity usage is relatively low, the flow control is not caused by the insufficient capacity. Therefore, the change policy is further determined based on the flow control parameter, to avoid excessive capacity expansion and reduce the use costs of the tenant.

In some embodiments, the running data of the first cloud disk further includes a current capacity of the first cloud disk, and determining that the change policy is expanding the cloud disk capacity includes: determining a target capacity based on the current capacity of the first cloud disk; and determining that the change policy is expanding the cloud disk capacity to the target capacity.

The current capacity may be a current total capacity of the first cloud disk. In other words, the current capacity may be a capacity of the first cloud disk before the change policy is determined.

For example, it is assumed that capacity usage of an SSD cloud disk whose current capacity is 100 GB is 98%. Because the capacity usage is high, flow control is frequently triggered. A target capacity may be determined based on the current capacity. In some embodiments, capacities of a plurality of levels may be preset. When the tenant needs to expand the cloud disk capacity, it may be determined that a target capacity is a capacity of a higher level than that of the current capacity. For example, the preset levels may be 100 GB, 200 GB, and 300 GB. Assuming that a current capacity of a cloud disk of the tenant is 200 GB, it may be determined that the target capacity is 300 GB. In some other embodiments, a capacity increase percentage may be preset. For example, the increase percentage may be set to 100%. Assuming that a current capacity of a cloud disk of the tenant is 200 GB, it may be determined that a target capacity is 400 GB.

Based on the foregoing solution, when the cloud disk capacity needs to be expanded, the target capacity may be further calculated, and the tenant is recommended to upgrade the cloud disk to expand the cloud disk capacity to the target capacity. In this way, the performance of the cloud disk of the tenant is effectively improved, frequent triggering of flow control is avoided, and user experience of the tenant is improved.

Refer to FIG. 3. In some embodiments, determining the change policy based on the flow control parameter includes: when the flow control parameter is less than a third threshold, determining that the change policy is automatically increasing the performance during the flow control, where the third threshold is greater than the first threshold; or when the flow control parameter is greater than or equal to a third threshold, determining that the change policy is switching to the second cloud disk.

The third threshold is a value greater than the first threshold. If the flow control parameter is greater than or equal to the third threshold, it means that the first cloud disk of the tenant triggers flow control excessively frequently, and it indicates that the tenant has a long-term high-performance requirement. Therefore, it may be determined that the change policy is switching to a new cloud disk with higher performance. If the flow control parameter is less than the third threshold, it means that although the first cloud disk of the tenant needs to be upgraded, the high-performance requirement of the tenant is merely accidental. Therefore, it may be determined that the change policy is automatically increasing the performance during the flow control. In this way, when a high-performance requirement occurs, the performance may be temporarily increased, to improve user experience of the tenant. When the high-performance requirement disappears, the first cloud disk may continue to be used, and no additional costs are needed, so that the use costs of the tenant are reduced.

Based on the foregoing solution, when triggering of flow control is excessively frequent, it may be determined that the change policy is switching to a new cloud disk with higher performance, to meet the long-term high-performance requirement of the tenant and improve user experience of the tenant. When triggering of flow control is between infrequent and excessive frequent, it may be determined that the change policy is automatically increasing the performance during the flow control. In this way, when a high-performance requirement occurs, the performance is temporarily increased, to improve user experience of the tenant, and when the high-performance requirement disappears, the previous cloud disk may continue to be used, to reduce the use costs of the tenant.

In some embodiments, the running data of the first cloud disk further includes a performance parameter, and determining that the change policy is switching to the second cloud disk includes: determining target performance based on the performance parameter of the first cloud disk; and determining that the change policy is switching to the second cloud disk that meets the target performance.

The performance parameter may include a performance upper limit, and the performance upper limit of the first cloud disk may be understood as maximum performance of the first cloud disk, for example, maximum IOPS or a maximum throughput.

The target performance may be determined based on the performance parameter. In some embodiments, performance of a plurality of levels may be preset. When the tenant needs to switch to a cloud disk with higher performance, it may be determined that the target performance is performance of a higher level than the current performance upper limit. In some other embodiments, a performance improvement percentage may be preset.

Based on the foregoing solution, when the performance needs to be improved, the target performance may be further calculated, and the tenant is recommended to upgrade the cloud disk by switching to a new cloud disk that meets the target performance, so that frequent triggering of flow control is effectively avoided and user experience of the tenant is improved.

In some embodiments, the method 200 further includes: obtaining running data of the storage pool; and determining, based on the running data of the storage pool, upgrade time corresponding to the change policy, where providing the recommendation interface for the tenant of the first cloud disk includes: providing the recommendation interface for the tenant of the first cloud disk, where the recommendation interface further includes the upgrade time.

For example, the running data of the storage pool may be data such as a throughput upper limit, an IOPS upper limit, a real-time read and write latency, a real-time throughput, real-time IOPS, and a quantity of performance warning times that are of the storage pool in which the first cloud disk is located. The plurality of cloud disks may be created in the storage pool. Total performance of these cloud disks may be considered as performance of the storage pool. For example, a total throughput of these cloud disks at a specific time point may be considered as a throughput of the storage pool at this time point.

If the performance of the storage pool reaches an upper limit, "storage pool overload" may occur. To prevent this situation, a performance warning threshold may be set, for example, the performance warning threshold is 70% of a performance parameter. In this way, when the performance of the storage pool reaches 70% of the performance parameter, performance warning is triggered.

It may be determined, based on the running data of the storage pool, whether the cloud disk can execute the change policy in the storage pool. If the change policy can be executed, it may be determined that needed upgrade time is relatively short. For example, it may be determined that the upgrade time is specific short time that is predetermined. If the change policy cannot be executed, the cloud disk needs to be migrated to another storage pool for upgrade. A storage pool that can accommodate an upgraded cloud disk needs to be determined, and data in the cloud disk needs to be migrated. Therefore, upgrade time is relatively long. In this case, the upgrade time may be determined based on factors such as running data of each storage pool and the data that is in the current cloud disk and that needs to be migrated.

Based on the foregoing solution, according to the cloud disk service change recommendation method provided in this embodiment of this application, the upgrade time can be determined based on the running data of the storage pool, and the upgrade time is provided for the tenant. This helps the tenant determine whether to perform the upgrade, and improves user experience of the tenant.

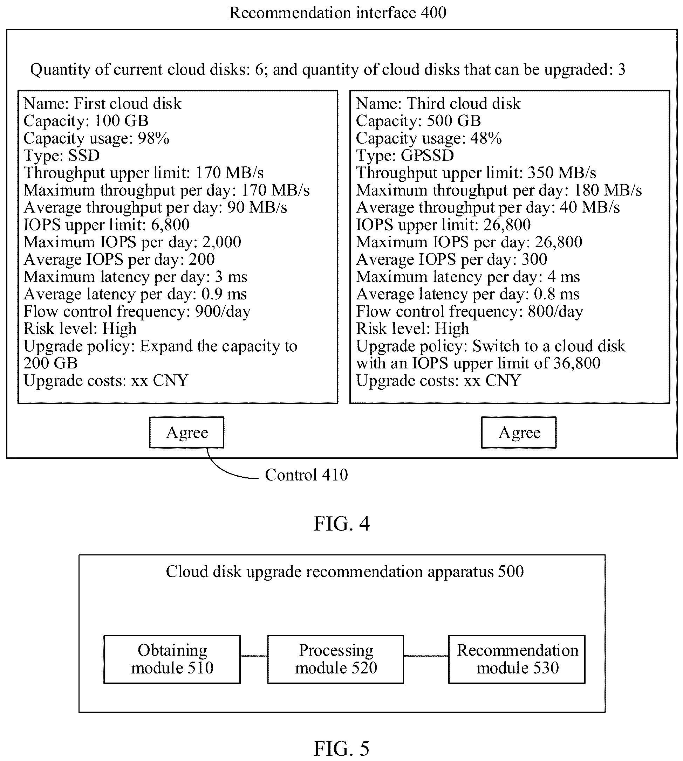

The following describes in detail an embodiment of a recommendation interface in this application with reference to FIG. 4.

FIG. 4 is a diagram of a recommendation interface 400 according to an embodiment of this application. FIG. 4 is merely an example, and does not constitute a limitation on this application. For example, a change policy may be alternatively shown in another form. For another example, the recommendation interface 400 includes two change policies, or may include more or fewer change policies.

In some embodiments, the recommendation interface further includes running data of a first cloud disk. For example, capacity usage and performance data that are of the cloud disk may be included.

Based on the foregoing solution, the recommendation interface further includes the running data of the cloud disk, so that a tenant can clearly learn of a running status of the cloud disk. This helps the tenant make decision, and improves user experience of the tenant.

The recommendation interface 400 may include a risk level, and the risk level may comprehensively describe a current status of using the cloud disk by the tenant. For example, when the tenant frequently triggers flow control, and the capacity usage and performance usage are relatively high, the risk level may be "high". For another example, when the capacity usage and performance usage of the tenant are relatively low, the risk level may be "good". It may be understood that there may be more risk levels. For example, the risk level may be "extremely high", "high", "medium", "low", "good", or the like. This is not limited in this application.

In some embodiments, the risk level may be determined based on a flow control parameter. For example, whether flow control is performed is sampled every minute, if flow control occurs during a minute, a count of the flow control parameter is increased by 1. In this case, a maximum flow control parameter per day is 1,440. If a flow control parameter per day is less than 144, that is, less than 10% of the maximum daily flow control parameter, the risk is determined as "low". If a flow control parameter per day is between 144 and 720, that is, between 10% to 50% of the maximum daily flow control parameter, the risk is determined as "medium". If a flow control parameter per day is greater than 720, that is, greater than 50% of the maximum daily flow control parameter, the risk is determined as "high". It should be noted that the foregoing embodiment is merely an example, and does not constitute a limitation on this application. It is clear that the risk level may alternatively be determined in another manner.

For one cloud disk, the recommendation interface 400 may further provide a plurality of change policies. For example, for one cloud disk, if a cloud disk capacity needs to be expanded, a plurality of change policies for the cloud disk, for example, expanding a small amount of capacity, expanding a moderate amount of capacity, or expanding a large amount of capacity, may be provided for the tenant. These change policies may be sorted based on a plurality of dimensions such as upgrade costs and risk levels, to provide the tenant with more choices. For example, for a tenant having a plurality of cloud disks, change policies for these cloud disks may be provided. For example, as shown in FIG. 4, change policies for two cloud disks may be provided at a time. This is not limited in this application. For example, more or fewer change policies may be provided at a time. These change policies may be sorted based on a plurality of dimensions such as collected tenant satisfaction degrees and tenant types. For example, if a tenant usually uses a type-A application, and it is collected from a database that the tenant using the type-A application is satisfied with a change policy B, the change policy B may be preferentially recommended to the tenant.

Refer to FIG. 4. In some embodiments, the recommendation interface 400 may further include a control 410. When a tenant clicks or taps the control 410, it indicates that the tenant agrees to a change policy above the control 410, and a background upgrades a cloud disk based on the change policy.

Refer to FIG. 4. For both the first cloud disk and a second cloud disk, the tenant perceives a high flow control parameter and a large latency. However, change policies for the first cloud disk and the second cloud disk are completely different. A reason is that flow control on the first cloud disk is caused by excessively high capacity usage, and flow control on the third cloud disk is caused by IOPS exceeding a performance parameter. However, the tenant usually lacks clarity on the causes of the flow control and may be prone to blindly perform an upgrade. If the tenant switches from the first cloud disk to a cloud disk with higher performance, the problem may not be resolved, and costs are increased. Therefore, by applying the cloud disk service change recommendation method provided in embodiments of this application, the tenant can select a proper change policy, to improve user experience of the tenant.

The foregoing describes in detail the method embodiments of this application. The following describes apparatus embodiments in embodiments of this application. The apparatus embodiments correspond to the method embodiments. Therefore, for parts that are not described in detail, refer to the foregoing method embodiments. The apparatus may implement any one of the possible implementations of the foregoing method.

FIG. 5 is a block diagram of a cloud disk service change recommendation apparatus 500 according to an embodiment of this application.

As shown in FIG. 5, the cloud disk service change recommendation apparatus 500 is used in a cloud management platform 110, the cloud management platform 110 is configured to manage infrastructure that provides a cloud service, the infrastructure includes a storage pool including storage space of a plurality of cloud servers, and the storage pool is virtually divided into a plurality of cloud disks. The cloud disk service change recommendation apparatus 500 includes: an obtaining module 510, configured to obtain running data of a first cloud disk in the plurality of cloud disks, where the running data of the first cloud disk includes a flow control parameter and capacity usage; a processing module 520, configured to determine a change policy for the first cloud disk based on the running data of the first cloud disk; and a recommendation module 530, configured to provide a recommendation interface for a tenant of the first cloud disk, where the recommendation interface includes the change policy.

In some embodiments, the processing module 520 is specifically configured to: when the flow control parameter is greater than or equal to a first threshold, determine the change policy based on the capacity usage.

In some embodiments, the processing module 520 is specifically configured to: when the capacity usage is greater than a second threshold, determine that the change policy is expanding a cloud disk capacity; or when the capacity usage is less than or equal to a second threshold, determine the change policy based on the flow control parameter.

In some embodiments, the running data of the first cloud disk further includes a current capacity of the first cloud disk, and the processing module 520 is specifically configured to: determine a target capacity based on the current capacity of the first cloud disk; and determine that the change policy is expanding the cloud disk capacity to the target capacity.

In some embodiments, the processing module 520 is specifically configured to: when the flow control parameter is less than a third threshold, determine that the change policy is automatically increasing performance during flow control, where the third threshold is greater than the first threshold. When the flow control parameter is greater than or equal to a third threshold, the processing module 520 is specifically configured to determine that the change policy is switching to a second cloud disk.

In some embodiments, the running data of the first cloud disk further includes a performance parameter, and the processing module 520 is specifically configured to: determine target performance based on the performance parameter of the first cloud disk; and determine that the change policy is switching to the second cloud disk that meets the target performance.

In some embodiments, the processing module 520 is specifically configured to: when the flow control parameter is less than the first threshold, determine that the change policy is skipping the upgrade.

In some embodiments, the obtaining module 510 is further configured to obtain running data of the storage pool. The processing module 520 is further configured to determine, based on the running data of the storage pool, upgrade time corresponding to the change policy. The recommendation module 530 is further configured to provide the recommendation interface for the tenant of the first cloud disk, where the recommendation interface further includes the upgrade time.

Specifically, for specific implementation of various operations of the cloud disk service change recommendation method performed by the apparatus 500, refer to descriptions of related content in the foregoing method embodiments. Details are not described herein again.

The obtaining module 510, the processing module 520, and the recommendation module 530 may all be implemented by using software, or may be implemented by using hardware. For example, the following uses the obtaining module 510 as an example to describe an implementation of the obtaining module 510. Similarly, for implementations of the processing module 520 and the recommendation module 530, refer to the implementation of the obtaining module 510.

A module is used as an example of a software functional unit, and the obtaining module 510 may include code run on a computing instance. The computing instance may include at least one of a physical host (a computing device), a virtual machine, and a container. Further, there may be one or more computing instances. For example, the obtaining module 510 may include code run on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed on a same virtual private cloud (virtual private cloud, VPC), or may be distributed on a plurality of VPCs. Generally, one VPC is disposed in one region. A communication gateway needs to be disposed in each VPC for communication between two VPCs in a same region and cross-region communication between VPCs in different regions. The VPCs are interconnected through the communication gateway.

A module is used as an example of a hardware functional unit, and the obtaining module 510 may include at least one computing device, for example, a server. Alternatively, the obtaining module 510 may be a device implemented by using an application-specific integrated circuit (application-specific integrated circuit, ASIC), a programmable logic device (programmable logic device, PLD), or the like. The PLD may be implemented by using a complex programmable logical device (complex programmable logical device, CPLD), a field-programmable gate array (field-programmable gate array, FPGA), generic array logic (generic array logic, GAL), or any combination thereof.

A plurality of computing devices included in the obtaining module 510 may be distributed in a same region, or may be distributed in different regions. The plurality of computing devices included in the obtaining module 510 may be distributed in a same AZ, or may be distributed in different AZs. Similarly, the plurality of computing devices included in the Java obtaining module 510 may be distributed on a same VPC, or may be distributed on a plurality of VPCs. The plurality of computing devices may be any combination of computing devices such as a server, an ASIC, a PLD, a CPLD, an FPGA, and GAL.

It should be noted that, in another embodiment, the obtaining module 510 may be configured to perform any step in the cloud disk service change recommendation method, the processing module 520 may be configured to perform any step in the cloud disk service change recommendation method, and steps implemented by the obtaining module 510, the processing module 520, and the recommendation module 530 may be specified as required. The obtaining module 510, the processing module 520, and the recommendation module 530 separately implement different steps in the cloud disk service change recommendation method, to implement all functions of the cloud disk service change recommendation apparatus 500.

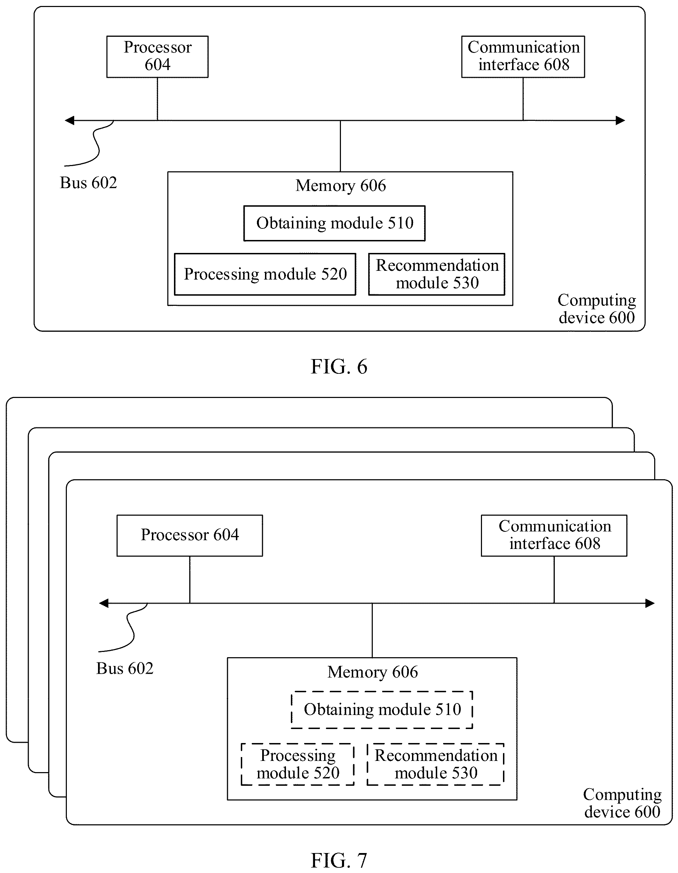

This application further provides a computing device 600. As shown in FIG. 6, the computing device 600 includes a bus 602, a processor 604, a memory 606, and a communication interface 608. The processor 604, the memory 606, and the communication interface 608 communicate with each other through the bus 602. The computing device 600 may be a server or a terminal device. It should be understood that, quantities of processors and memories in the computing device 600 are not limited in this application.

The bus 602 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, the bus is represented by using only one line in FIG. 6. However, it does not mean that there is only one bus or only one type of bus. The bus 602 may include a path for information transmission between components (for example, the memory 606, the processor 604, and the communication interface 608) of the computing device 600.

The processor 604 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 606 may include a volatile memory (volatile memory), for example, a random access memory (random access memory, RAM). The memory 606 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 606 stores executable program code, and the processor 604 executes the executable program code to separately implement functions of the obtaining module 510, the processing module 520, and the recommendation module 530, to implement the cloud disk service change recommendation method. That is, the memory 606 stores instructions for performing the cloud disk service change recommendation method.

The communication interface 608 uses a transceiver module, for example, but is not limited to, a network interface card or a transceiver, to implement communication between the computing device 600 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device like a desktop computer, a notebook computer, or a smartphone.

As shown in FIG. 7, the computing device cluster includes at least one computing device 600. Memories 606 in one or more computing devices 600 in the computing device cluster may store same instructions for performing the cloud disk service change recommendation method.

In some embodiments, the memories 606 in the one or more computing devices 600 in the computing device cluster may also separately store a part of instructions for performing the cloud disk service change recommendation method. In other words, a combination of the one or more computing devices 600 may jointly execute instructions for performing the cloud disk service change recommendation method.

It should be noted that, memories 606 in different computing devices 600 in the computing device cluster may store different instructions for performing a part of functions of the cloud disk service change recommendation apparatus 500. In other words, the instructions stored in the memories 606 in different computing devices 600 may implement functions of one or more of the obtaining module 510, the processing module 520, and the recommendation module 520.

In some embodiments, the one or more computing devices in the computing device cluster may be connected over a network. The network may be a wide area network, a local area network, or the like.

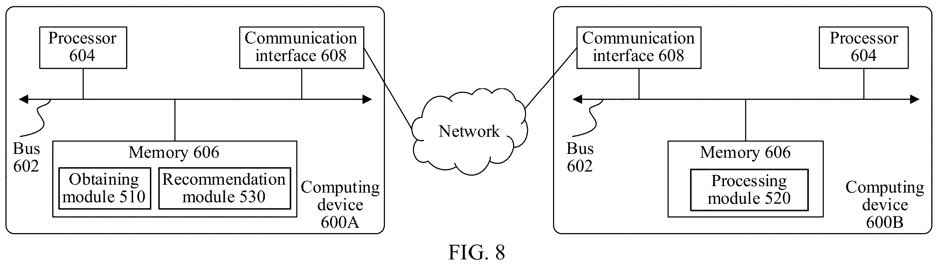

FIG. 8 shows a possible implementation. As shown in FIG. 8, two computing devices 600A and 600B are connected over a network. Specifically, each computing device is connected to the network through a communication interface in the computing device. In this type of possible implementation, a memory 606 in the computing device 600A stores instructions for performing functions of an obtaining module 510 and a recommendation module 530. In addition, a memory 606 in the computing device 600B stores instructions for performing a function of the processing module 520.

A connection manner between computing device clusters shown in FIG. 8 may be that, in consideration of the cloud disk service change recommendation method provided in this application, a large amount of running data needs to be obtained and a change policy needs to be determined, and therefore, it is considered that functions implemented by the processing module 520 are performed by the computing device 600B.

It should be understood that, a function of the computing device 600A shown in FIG. 8 may alternatively be completed by a plurality of computing devices 600. Similarly, a function of the computing device 600B may alternatively be completed by a plurality of computing devices 600.

In some embodiments, memories 606 in one or more computing devices 600 in the computing device cluster may also separately store a part of instructions for performing the cloud disk service change recommendation method. In other words, a combination of the one or more computing devices 600 may jointly execute instructions for performing the cloud disk service change recommendation method.

An embodiment of this application further provides a computer program product including instructions. The computer program product may be software or a program product that includes the instructions and that can run on a computing device or be stored in any usable medium. When the computer program product runs on at least one computing device, the at least one computing device is enabled to perform the foregoing cloud disk service change recommendation method.

An embodiment of this application further provides a computer-readable storage medium. The computer-readable storage medium may be any usable medium that can be stored in a computing device, or a data storage device like a data center including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and the instructions instruct the computing device to perform the foregoing cloud disk service change recommendation method.

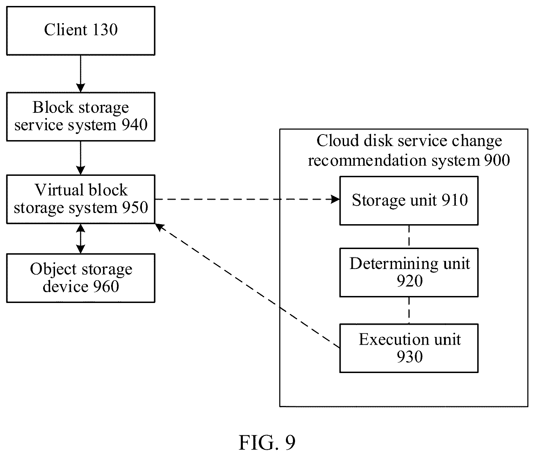

FIG. 9 is a block diagram of a cloud disk service change recommendation system 900 according to an embodiment of this application.

Referring to FIG. 9, a client 130 may implement cloud storage by using a block storage service system 940 (for example, a cinder component). For example, the block storage service system 940 may run in a cloud management platform 110.

After receiving instructions (for example, read instructions or write instructions) sent by the client 130, the block storage service system 940 may invoke a virtual block storage system 950 to execute the instructions. The virtual block storage system 950 may disguise underlying object storage as block storage. The virtual block storage system 950 may also be referred to as a virtual block service (virtual block service, VBS) system, and the VBS system may access a VBS cluster. The virtual block storage system 950 may be responsible for management of a volume (volume) and metadata (metadata), and belongs to a service I/O process. For example, a VBS process may be deployed on each cloud server to form a VBS cluster, so that the client 130 can access, by using the VBS cluster, information stored on each cloud server.

An object storage device (object storage device, OSD) 960 may be configured to perform a specific I/O operation. Generally, one OSD process may be deployed on one physical disk. Because one cloud server has a plurality of physical disks, a plurality of OSD processes may be deployed on one cloud server. The object storage device 960 may take over an underlying storage medium and simulate the underlying storage medium as object storage, receive an I/O request from the virtual block storage system 950, and perform a specific I/O action on an underlying entity disk based on the I/O request.

The cloud disk service change recommendation system 900 includes a storage unit 910, a determining unit 920, and an execution unit 930.

The object storage device 960 may be configured to collect running data of a cloud disk and report the running data to the virtual block storage system 950. The virtual block storage system 950 may transmit the running data to the cloud disk service change recommendation system 900. The storage unit 910 may be configured to store the running data.

The determining unit 920 may be used as the foregoing cloud disk service change recommendation apparatus 500 to perform the foregoing cloud disk service change recommendation method. In this way, the determining unit 920 may determine whether an upgrade needs to be performed, and provide a recommendation interface for a tenant. In some embodiments, the determining unit 920 may further analyze whether performance and a capacity of a storage pool in which the cloud disk is located support a change policy, and calculate time required for the upgrade. In this embodiment, the recommendation interface further includes the time required for the upgrade.

The execution unit 930 may send a corresponding execution command to the virtual block storage system 950 based on an instruction of the tenant. For example, the tenant agrees to perform the upgrade based on the change policy, and the execution unit 930 may send an execution command of the change policy to the virtual block storage system 950. After the upgrade is completed, a notification indicating a success upgrade is sent to the tenant and a performance parameter or a capacity upper limit of a cloud disk of the tenant is updated, to change a cloud disk service.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in another manner. For example, the described apparatus embodiment is merely an example. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or a part of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A cloud disk service change recommendation method, wherein the method is applied to a cloud management platform, the cloud management platform is configured to manage infrastructure that provides a cloud service, the infrastructure comprises a storage pool comprising storage space of a plurality of cloud servers, and the storage pool is virtually divided into a plurality of cloud disks, wherein the method comprises:

obtaining running data of a first cloud disk in the plurality of cloud disks, wherein the running data of the first cloud disk comprises a flow control parameter and capacity usage;

determining a change policy for the first cloud disk based on the running data of the first cloud disk; and

providing a recommendation interface for a tenant of the first cloud disk, wherein the recommendation interface comprises the change policy.

2. The method according to claim 1, wherein the change policy comprises one or more of the following: skipping an upgrade, expanding a cloud disk capacity, switching to a second cloud disk, or automatically increasing performance during flow control, wherein performance of the second cloud disk is greater than performance of the first cloud disk.

3. The method according to claim 1 or 2, wherein the determining the change policy for the first cloud disk based on the running data of the first cloud disk comprises:
when the flow control parameter is greater than or equal to a first threshold, determining the change policy based on the capacity usage.

4. The method according to claim 3, wherein the determining the change policy based on the capacity usage comprises:

when the capacity usage is greater than a second threshold, determining that the change policy is expanding the cloud disk capacity; or

when the capacity usage is less than or equal to a second threshold, determining the change policy based on the flow control parameter.

5. The method according to claim 4, wherein the running data of the first cloud disk further comprises a current capacity of the first cloud disk, and the determining that the change policy is expanding the cloud disk capacity comprises:

determining a target capacity based on the current capacity of the first cloud disk; and

determining that the change policy is expanding the cloud disk capacity to the target capacity.

6. The method according to claim 4 or 5, wherein the determining the change policy based on the flow control parameter comprises:

when the flow control parameter is less than a third threshold, determining that the change policy is automatically increasing the performance during the flow control, wherein the third threshold is greater than the first threshold; or

when the flow control parameter is greater than or equal to a third threshold, determining that the change policy is switching to the second cloud disk.

7. The method according to claim 6, wherein the running data of the first cloud disk further comprises a performance parameter, and the determining that the change policy is switching to the second cloud disk comprises:

determining target performance based on the performance parameter of the first cloud disk; and

determining that the change policy is switching to the second cloud disk that meets the target performance.

8. The method according to any one of claims 1 to 7, wherein the determining the change policy for the first cloud disk based on the running data of the first cloud disk comprises:
when the flow control parameter is less than the first threshold, determining that the change policy is skipping the upgrade.

9. The method according to any one of claims 1 to 8, wherein the recommendation interface further comprises the running data of the first cloud disk.

10. The method according to any one of claims 1 to 9, further comprising:

obtaining running data of the storage pool; and

determining, based on the running data of the storage pool, upgrade time corresponding to the change policy, wherein the providing the recommendation interface for the tenant of the first cloud disk comprises:

providing the recommendation interface for the tenant of the first cloud disk, wherein the recommendation interface further comprises the upgrade time.

11. A cloud disk service change recommendation apparatus, wherein the apparatus is used in a cloud management platform, the cloud management platform is configured to manage infrastructure that provides a cloud service, the infrastructure comprises a storage pool comprising storage space of a plurality of cloud servers, and the storage pool is virtually divided into a plurality of cloud disks, wherein the apparatus comprises:

an obtaining module, configured to obtain running data of a first cloud disk in the plurality of cloud disks, wherein the running data of the first cloud disk comprises a flow control parameter and capacity usage;

a processing module, configured to determine a change policy for the first cloud disk based on the running data of the first cloud disk; and

a recommendation module, configured to provide a recommendation interface for a tenant of the first cloud disk, wherein the recommendation interface comprises the change policy.

12. The apparatus according to claim 11, wherein the change policy comprises one or more of the following: skipping an upgrade, expanding a cloud disk capacity, switching to a second cloud disk, or automatically increasing performance during flow control, wherein performance of the second cloud disk is greater than performance of the first cloud disk.

13. The apparatus according to claim 11 or 12, wherein the processing module is specifically configured to: when the flow control parameter is greater than or equal to a first threshold, determine the change policy based on the capacity usage.

14. The apparatus according to claim 13, wherein the processing module is specifically configured to:

when the capacity usage is greater than a second threshold, determine that the change policy is expanding the cloud disk capacity; or

when the capacity usage is less than or equal to a second threshold, determine the change policy based on the flow control parameter.

15. The apparatus according to claim 14, wherein the running data of the first cloud disk further comprises a current capacity of the first cloud disk, and the processing module is specifically configured to:

determine a target capacity based on the current capacity of the first cloud disk; and

determine that the change policy is expanding the cloud disk capacity to the target capacity.

16. The apparatus according to claim 14 or 15, wherein the processing module is specifically configured to:

when the flow control parameter is less than a third threshold, determine that the change policy is automatically increasing the performance during the flow control, wherein the third threshold is greater than the first threshold; or

when the flow control parameter is greater than or equal to a third threshold, determine that the change policy is switching to the second cloud disk.

17. The apparatus according to claim 16, wherein the running data of the first cloud disk further comprises a performance parameter, and the processing module is specifically configured to:

determine target performance based on the performance parameter of the first cloud disk; and

determine that the change policy is switching to the second cloud disk that meets the target performance.

18. The apparatus according to any one of claims 11 to 17, wherein the processing module is specifically configured to:

when the flow control parameter is less than the first threshold, determine that the change policy is skipping the upgrade.

19. The apparatus according to any one of claims 11 to 18, wherein the recommendation interface further comprises the running data of the first cloud disk.

20. The apparatus according to any one of claims 11 to 19, wherein

the obtaining module is further configured to obtain running data of the storage pool; and

the processing module is further configured to determine, based on the running data of the storage pool, upgrade time corresponding to the change policy, wherein

the recommendation module is further configured to provide the recommendation interface for the tenant of the first cloud disk, wherein the recommendation interface further comprises the upgrade time.

21. A computing device cluster, comprising at least one computing device, wherein each computing device comprises a processor and a memory, wherein a processor of the at least one computing device is configured to execute instructions stored in a memory of the at least one computing device, to enable the computing device cluster to perform the method according to any one of claims 1 to 10.

22. A computer program product comprising instructions, wherein when the instructions are run by a computing device cluster, the computing device cluster is enabled to perform the method according to any one of claims 1 to 10.

23. A computer-readable storage medium, comprising computer program instructions, wherein when the computer program instructions are executed by a computing device cluster, the computing device cluster performs the method according to any one of claims 1 to 10.

Cloud system

Infrastructure

Cloud data center 1

Cloud server 1

Software layer

| Cloud service 1 | Cloud service 2 |
|---|---|

Hardware layer

Processor

| Memory | Network interface card |
|---|---|

Cloud server 2

| Cloud service 4 | Cloud service 3 |
|---|---|

Hardware layer

Processor

| Memory | Network interface card |
|---|---|

Server n        ...

Cloud data center 2

Tenant 1

Client 130

Internet 120

Cloud management platform 110

Tenant 2

Client 130

FIG. 1

200

S210: Obtain running data of a first cloud disk in a plurality of cloud disks, where the running data of the first cloud disk includes a flow control parameter and capacity usage

S220: Determine a change policy for the first cloud disk based on the running data of the first cloud disk

S230: Provide a recommendation interface for a tenant of the first cloud disk, where the recommendation interface includes the change policy

FIG. 2

Skip an upgrade ←No— Flow control parameter≥First threshold

Yes ↓

S221: Determine a change policy based on capacity usage

Expand a cloud disk capacity ←Yes— Capacity usage>Second threshold

No ↓

S222: Determine the change policy based on the flow control parameter

Increase performance during flow control ←Yes— Flow control parameter<Third threshold

No ↓

Switch to a second cloud disk

FIG. 3

Recommendation interface 400

Quantity of current cloud disks: 6; and quantity of cloud disks that can be upgraded: 3

Name: First cloud disk
Capacity: 100 GB
Capacity usage: 98%
Type: SSD
Throughput upper limit: 170 MB/s
Maximum throughput per day: 170 MB/s
Average throughput per day: 90 MB/s
IOPS upper limit: 6,800
Maximum IOPS per day: 2,000
Average IOPS per day: 200
Maximum latency per day: 3 ms
Average latency per day: 0.9 ms
Flow control frequency: 900/day
Risk level: High
Upgrade policy: Expand the capacity to 200 GB
Upgrade costs: xx CNY

Name: Third cloud disk
Capacity: 500 GB
Capacity usage: 48%
Type: GPSSD
Throughput upper limit: 350 MB/s
Maximum throughput per day: 180 MB/s
Average throughput per day: 40 MB/s
IOPS upper limit: 26,800
Maximum IOPS per day: 26,800
Average IOPS per day: 300
Maximum latency per day: 4 ms
Average latency per day: 0.8 ms
Flow control frequency: 800/day
Risk level: High
Upgrade policy: Switch to a cloud disk with an IOPS upper limit of 36,800
Upgrade costs: xx CNY

Agree

Agree

Control 410

FIG. 4

Cloud disk upgrade recommendation apparatus 500

Obtaining module 510 — Processing module 520 — Recommendation module 530

FIG. 5

Processor
604

Communication
interface 608

Bus 602

Memory 606

Obtaining module 510

Processing module 520

Recommendation
module 530

Computing
device 600

FIG. 6

Processor 604

Communication
interface 608

Bus 602

Memory 606

Obtaining module 510

Processing
module 520

Recommendation
module 530

Computing
device 600

FIG. 7

Processor
604

Communication
interface 608

Bus
602

Memory 606

Obtaining
module 510

Recommendation
module 530

Computing
device
600A

Network

Communication
interface 608

Processor
604

Bus
602

Memory 606

Processing
module 520

Computing
device
600B

FIG. 8

Client 130

Block storage
service system 940

Virtual block
storage system 950

Object storage
device 960

Cloud disk service change
recommendation system 900

Storage unit 910

Determining unit
920

Execution unit
930

FIG. 9

## INTERNATIONAL SEARCH REPORT

| International application No. |
| --- |
| **PCT/CN2024/080115** |

| A. | CLASSIFICATION OF SUBJECT MATTER |
| --- | --- |

H04L41/0894(2022.01)i

According to International Patent Classification (IPC) or to both national classification and IPC

| B. | FIELDS SEARCHED |
| --- | --- |

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNABS: CNTXT; CNKI; VEN; USTXT; WOTXT; EPTXT; 3GPP; IETF; IEEE: 云盘, 云磁盘, 服务, 变更, 升级, 扩容, 策略, 流控, 容量, 使用率, 云平台, 云服务器, 运行数据, 扩充, block storage, cloud storage, IOPS, flow control, Performance, Capacity

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 115098020 A (CHINA UNITED NETWORK COMMUNICATIONS GROUP CO., LTD.) 23 September 2022 (2022-09-23) description, paragraphs [0063]-[0176] | 1-23 |
| A | CN 115801575 A (HUAWEI CLOUD COMPUTING TECHNOLOGY CO., LTD.) 14 March 2023 (2023-03-14) entire document | 1-23 |
| A | CN 116009777 A (JINGDONG SHUKE HAIYI INFORMATION TECHNOLOGY CO., LTD.) 25 April 2023 (2023-04-25) entire document | 1-23 |
| A | CN 116166181 A (HUAWEI CLOUD COMPUTING TECHNOLOGY CO., LTD.) 26 May 2023 (2023-05-26) entire document | 1-23 |
| A | US 2016041787 A1 (IBM) 11 February 2016 (2016-02-11) entire document | 1-23 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **15 May 2024** | **16 May 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/080115**

| Patent document cited in search report | | | Publication date (day/month/year) | Patent family member(s) | | | Publication date (day/month/year) |
|---|---|---|---|---|---|---|---|
| CN | 115098020 | A | 23 September 2022 | None | | | |
| CN | 115801575 | A | 14 March 2023 | None | | | |
| CN | 116009777 | A | 25 April 2023 | None | | | |
| CN | 116166181 | A | 26 May 2023 | WO | 2023093194 | A1 | 01 June 2023 |
| US | 2016041787 | A1 | 11 February 2016 | US | 2016350008 | A1 | 01 December 2016 |
| | | | | US | 9880751 | B2 | 30 January 2018 |
| | | | | US | 9442669 | B2 | 13 September 2016 |

Form PCT/ISA/210 (patent family annex) (July 2022)

**REFERENCES CITED IN THE DESCRIPTION**

**Patent documents cited in the description**

- CN 202311294827

- CN 202310833309